# EUROPÄISCHE PATENTSCHRIFT

(11) **EP 3 221 641 B1**
(45) Veröffentlichungstag und Bekanntmachung des Hinweises auf die Patenterteilung: **02.12.2020**
(21) Anmeldenummer: 15819786.3
(22) Anmeldetag: 26.10.2015
(51) Int. Cl.: F23D 3/40

(54) **VERDAMPFERANORDNUNG**
EVAPORATOR ARRANGEMENT
DISPOSITIF ÉVAPORATEUR

(30) Priorität: 23.11.2014 DE 102014117115
(43) Veröffentlichungstag der Anmeldung: 27.09.2017
(73) Patentinhaber: Webasto SE, 82131 Stockdorf (DE)
(72) Erfinder: MÖSL, Klaus, 82131 Stockdorf (DE); MEIER, Bengt, 82131 Stockdorf (DE); ILCHENKO, Volodymyr, 82131 Stockdorf (DE); PÖHNER, Michael, 82131 Stockdorf (DE)
(74) Vertreter: Ciesla, Bettina
(86) Internationale Anmeldenummer: PCT/DE2015/100449
(87) Internationale Veröffentlichungsnummer: WO 2016/078641

(56) Entgegenhaltungen:
- DE-A1- 10 219 853
- DE-A1-102008 031 083
- DE-A1-102009 003 363
- DE-A1-102013 005 688
- DE-A1-102013 016 308
- DE-B3-102012 111 289
- DE-C1- 4 141 367
- DE-U1-202010 003 300

## Beschreibung

Die vorliegende Erfindung betrifft eine Verdampferanordnung zum Verdampfen von flüssigem Brennstoff für ein mobiles, brennstoffbetriebenes Heizgerät und ein mobiles Heizgerät mit einer solchen Verdampferanordnung.

In mobilen, mit flüssigem Brennstoff betriebenen Heizgeräten kommen häufig sogenannte Verdampferbrenner zum Einsatz, bei denen der flüssige Brennstoff, der insbesondere durch Benzin, Diesel, Ethanol oder ähnliches gebildet sein kann, in einem Verdampferkörper bzw. von dessen Oberfläche verdampft, mit zugeführter Brennluft zu einem Brennstoff-Luft-Gemisch vermischt und anschließend unter Freisetzung von Wärme umgesetzt wird. Die zum Einsatz kommenden Verdampferkörper sind aus einem porösen, saugfähigen Material gebildet und weisen üblicherweise ein Metallvlies bzw. Metallfaservlies auf.

Unter einem "mobilen Heizgerät" wird im vorliegenden Kontext ein Heizgerät verstanden, das für den Einsatz in mobilen Anwendungen ausgelegt und dementsprechend angepasst ist. Dies bedeutet insbesondere, dass es transportabel ist (ggf. in einem Fahrzeug fest eingebaut oder lediglich für den Transport darin untergebracht) und nicht ausschließlich für einen dauerhaften, stationären Einsatz, wie es beispielsweise bei der Beheizung eines Gebäudes der Fall ist, ausgelegt ist. Dabei kann das mobile Heizgerät auch fest in einem Fahrzeug (Landfahrzeug, Schiff, etc.), insbesondere in einem Landfahrzeug, installiert sein. Insbesondere kann es zur Beheizung eines Fahrzeug-Innenraums, wie beispielsweise eines Land-, Wasser- oder Luftfahrzeugs, sowie eines teiloffenen Raumes, wie er beispielsweise auf Schiffen, insbesondere Yachten, aufzufinden ist, ausgelegt sein. Das mobile Heizgerät kann auch vorübergehend stationär eingesetzt werden, wie beispielsweise in großen Zelten, Containern (zum Beispiel Baucontainern), etc. Insbesondere kann das mobile Heizgerät als Standheizung oder Zusatzheizung für ein Landfahrzeug, wie beispielsweise für einen Wohnwagen, ein Wohnmobil, einen Bus, einen Pkw, etc., ausgelegt sein.

Die üblicherweise als Verdampferkörper zum Einsatz kommenden Metallvliese unterliegen relativ hohen Fertigungstoleranzen, sodass sowohl die Mikrostruktur der einzelnen Fasern als auch die Orientierung und Verteilung der Fasern in dem Verdampferkörper relativ hohen Schwankungen unterliegen. Diese Schwankungen haben einen starken Einfluss auf die Gleichverteilung und Richtungsabhängigkeit der Porosität, der Permeabilität und der effektiven Wärmeleitfähigkeit des Verdampferkörpers. Aufgrund dieser Effekte kann es zu einer ungleichmäßigen Brennstoffverteilung und -verdampfung kommen, die z.B. zu Ablagerungsbildung im Verdampferkörper und Koksaufbau in der nachgeordneten Brennkammer führen können.

DE 10 2011 050 368 A1 beschreibt eine Verdampferanordnung für einen Verdampferbrenner eines mobilen Heizgeräts mit einem Verdampferkörper zum Verteilen und Verdampfen eines flüssigen Brennstoffs. Der Verdampferkörper weist zumindest eine Schicht aus einem Metallgewebe aus miteinander verwebten Metalldrähten auf. Die Verwendung von Metallgewebe ermöglicht zwar eine präzisere Fertigung des Verdampferkörpers, ist aber mit einer deutlichen Erhöhung der Herstellungskosten verbunden.

Aus der DE 41 41 367 C1 ist eine Verdampferbrenneranordnung bekannt, bei der die Brennkammer eintrittsseitig einen Brennkammerboden aufweist, auf dem eine Platte aus einem saugfähigen und porösen Material, wie z.B. aus einem Keramikvlies oder einem Metalldraht-gestrick, aufliegt. Über diese Platte wird Brennstoff, der über eine Brennstoffzuleitung zugeführt wird, verteilt. Aus der DE 20 2010 003 300 U1 ist eine Vorrichtung zur Verbrennung von flüssigem Brennstoff, insbesondere von Alkohol, bekannt. Die Vorrichtung umfasst ein Aufnahmebehältnis für den Brennstoff mit einer in Gebrauchslage oberen Öffnung. Die Vorrichtung umfasst ferner ein Abdeckmittel, das zumindest teilweise die obere Öffnung des Aufnahmebehältnisses abdecken kann und eine Abbrennfläche aufweist, an oder auf der Brennstoff abbrennen kann. Dabei kann vorgesehen sein, dass das Abdeckmittel aus einem Metallgestrick ausgebildet ist. Weitere Verdampferanordnungen sind aus den Druckschriften DE 10 2008 031 083 A1, DE 10 2009 003 363 A1 und DE 10 2012 111 289 B3 bekannt. In den Druckschriften DE 102 19 853 A1, DE 10 2013 016 308 A1 und DE 10 2013 005 688 A1 sind jeweils Herstellverfahren für Metalldrahtgestricke beschrieben, die unter anderem die Schritte des Umformens und Verdichtens aufweisen.

Es ist Aufgabe der vorliegenden Erfindung, eine verbesserte Verdampferanordnung zum Verdampfen von flüssigem Brennstoff für ein mobiles, brennstoffbetriebenes Heizgerät und ein verbessertes mobiles Heizgerät bereitzustellen, bei denen die bei den herkömmlichen Verdampferkörpern auftretenden Probleme verringert sind und die eine kostengünstige Herstellung ermöglichen.

Die Aufgabe wird durch eine Verdampferanordnung zum Verdampfen von flüssigem Brennstoff gemäß Anspruch 1 gelöst. Vorteilhafte Weiterbildungen sind in den abhängigen Ansprüchen angegeben.

Die Verdampferanordnung zum Verdampfen von flüssigem Brennstoff weist einen Verdampferkörper zum Verteilen und Verdampfen flüssigen Brennstoffs und zumindest eine Brennstoffzufuhrleitung zum Zuführen flüssigen Brennstoffs zu dem Verdampferkörper auf. Der Verdampferkörper weist zumindest einen ersten Bereich aus einem Metalldraht-Gestrick auf.

Die Verdampferanordnung ist somit derart ausgebildet, dass der flüssige Brennstoff in der flüssigen Phase zu dem Verdampferkörper zugeführt wird und die Verdampfung/Verdunstung des Brennstoffs in und an dem Verdampferkörper erfolgt. Eine Durchmischung des verdampften Brennstoffs mit Verbrennungsluft zu einem Brennstoff-Luft-Gemisch erfolgt somit erst außerhalb des Verdampferkörpers und gegebenenfalls zu Beginn des Verdampfungsprozesses vorhandene Luft wird durch den verdampfenden Brennstoff aus dem Verdampferkörper ausgetrieben, sodass in dem Verdampferkörper keine nennenswerte Umsetzung von Brennstoff mit Brennluft erfolgt.

Durch den ersten Bereich aus Metalldraht-Gestrick können die Eigenschaften des Verdampferkörpers sehr genau vorgegeben werden. Z.B. kann der gesamte Verdampferkörper aus Metalldraht-Gestrick gebildet sein oder es kann z.B. auch nur ein Bereich (oder ggfs. mehrere Bereiche) des Verdampferkörpers aus Metalldraht-Gestrick gebildet sein und andere Bereiche können aus anderen Materialien gebildet sein, insbesondere aus Metallvlies, Metallgewebe, Metallgeflecht und/oder Metallgewirk. Der Verdampferkörper kann insbesondere auch mehrere Bereiche aufweisen, die aus demselben Metalldraht-Gestrick oder verschiedenen Metalldraht-Gestricken gebildet sind. Gegenüber einem Verdampferkörper aus z.B. Metallvlies hat die Verwendung des Metalldraht-Gestricks unter anderem den Vorteil, dass die Eigenschaften des ersten Bereiches aus Metalldraht-Gestrick sehr genau vorgegeben werden können. Das Metalldraht-Gestrick kann insbesondere sehr kostengünstig aus einem Metalldraht oder aus mehreren Metalldrähten durch einen Strickprozess erzeugt werden, wobei dem Metalldraht-Gestrick zum Beispiel auf einer industriellen Strickmaschine und mittels der nachgeschalteten Verarbeitungsprozesse nahezu beliebige Formen gegeben werden können. Das Metalldraht-Gestrick für den ersten Bereich kann dabei z.B. als Flachgestrick mit im Wesentlichen ebener Formgebung oder aber auch z.B. als Rundgestrick mit z.B. im Wesentlichen schlauchförmiger Form bereitgestellt werden. Das Metalldraht-Gestrick kann z.B. noch durch Ablängen auf eine gewünschte Länge, Umlegen und ggfs. Vernähen, Aufrollen, Falten, Pressen bzw. Formpressen, Walzen, Rollieren, auf Maß Kalibrieren; Versintern, Verlöten oder Verschweißen des Metalldrahtes bzw. der Metalldrähte des Metalldraht-Gestrickes mit den gewünschten Eigenschaften versehen werden. Verglichen mit z.B. einem Metallgewebe, bei dem die einzelnen Drähte in einer Ebene verlaufen, kann das Metalldraht-Gestrick wesentlich kostengünstiger hergestellt und gegebenenfalls ohne Verschnitt in die gewünschte Form gebracht werden. Falls dies dennoch gewünscht sein sollte, kann auch das Metalldraht-Gestrick in einfacher Weise durch Stanzen, Laserschneiden oder Ähnliches zusätzlich bearbeitet werden. Verglichen mit z.B. einem Metallvlies oder einem Metallgewebe, die eine im Wesentlichen zweidimensionale Struktur einzelner Lagen aufweisen, ermöglicht die Verwendung des Metalldraht-Gestrickes eine zusammenhängende dreidimensionale Struktur des Verdampferkörpers, sodass über den fortlaufenden Draht bzw. die fortlaufenden zusammenhängenden Drähte des Metalldraht-Gestrickes eine gute thermische Leitfähigkeit in alle Richtungen gegeben ist, d.h. es kann eine hohe Isotropie bzgl. der Wärmeleitung bereitgestellt werden. Die Verwendung des Metalldraht-Gestrickes ermöglicht ferner auch eine hohe mechanische Stabilität des Verdampferkörpers, da die bei einem Metallvlies oder einer mehrlagigen Metallgewebe-Struktur vorhandene Neigung zum Auftrennen bzw. Aufspleißen der einzelnen Lagen nicht gegeben ist. Da es sich um ein Metalldraht-Gestrick handelt, ist ferner eine gute Wärmeleitung gegeben, die für die Aufrechterhaltung eines stabilen Verdampfungsprozesses vorteilhaft ist.

Das Metalldraht-Gestrick kann dabei insbesondere aus einem oder mehreren Drähten aus einem temperaturbeständigen Material, insbesondere aus temperaturbeständigem Stahl gebildet sein. Ein Metalldraht-Gestrick wird in einem Strickprozess aus einem Metalldraht oder ggfs. mehreren Metalldrähten dadurch erzeugt, dass der Metalldraht bzw. die Metalldrähte als Schlaufen mit sich selbst verschlungen werden. Geeignete industrielle Strickmaschinen sind wohlbekannt. Metalldraht-Gestricke weisen daher von Metallvliesen, die eine Vielzahl ungeordnet arrangierter Fasern aufweisen, Metallgeweben, Metallgeflechten und Metallgewirken verschiedene Struktur und Eigenschaften auf.

Gemäß der vorliegenden Erfindung weist der erste Bereich aus Metalldraht-Gestrick umgeformtes und verdichtetes Metalldraht-Gestrick auf. Durch das Umformen und Verdichten können die Eigenschaften des ersten Bereichs sehr gezielt eingestellt werden. Insbesondere kann die Porosität sehr gezielt eingestellt werden. Wiederum ist es möglich, dass der erste Bereich den gesamten Verdampferkörper bildet oder aber es können auch weitere Bereiche des Verdampferkörpers vorgesehen sein.

Gemäß einer Weiterbildung weist der Verdampferkörper zumindest einen weiteren Bereich aus Metalldraht-Gestrick mit einer von dem ersten Bereich verschiedenen Porosität auf. In diesem Fall können verschiedene Bereiche des Verdampferkörpers gezielt mit unterschiedlichen Eigenschaften versehen werden, um die gewünschten Verdampfungseigenschaften bereitzustellen. Der weitere Bereich kann z.B. aus demselben Metalldraht-Gestrick wie der erste Bereich gebildet sein und lediglich stärker oder weniger stark verdichtet sein, um die andere Porosität zu erhalten. Dabei kann der weitere Bereich gegebenenfalls auch einstückig mit dem ersten Bereich aus einem zusammenhängenden Metalldraht-Gestrick gebildet sein, das lediglich unterschiedlich stark umgeformt bzw. verdichtet ist. Andererseits kann der weitere Bereich auch aus einem anderen Metalldraht-Gestrick gebildet sein, das sich z.B. in der Dicke des verwendeten Metalldrahtes bzw. der verwendeten Metalldrähte unterscheidet.

Gemäß einer Weiterbildung weist das Metalldraht-Gestrick in dem zumindest einen weiteren Bereich einen von dem Metalldraht-Gestrick in dem ersten Bereich verschiedenen Verdichtungsgrad und/oder eine verschiedene Drahtstärke auf.

Je nach den gewünschten Eigenschaften des Verdampferkörpers kann das Metalldraht-Gestrick aus einem Flachgestrick und/oder einem Rundgestrick gebildet sein. Die beiden Ausgestaltungen können z.B. auch derart kombiniert sein, dass ein Bereich aus einem Flachgestrick gebildet ist und ein anderer Bereich aus einem Rundgestrick.

Gemäß einer Weiterbildung sind die Drähte des Metalldraht-Gestricks zumindest teilweise miteinander verschweißt, verlötet oder versintert. In diesem Fall kann die mechanische Stabilität des Verdampferkörpers weiter erhöht werden und auch die thermische Leitfähigkeit kann zusätzlich verbessert werden. Neben dem Verschweißen, Verlöten oder Versintern der Drähte des Metalldraht-Gestricks untereinander kann z.B. auch ein Verschweißen, Verlöten oder Versintern mit anderen Bereichen des Verdampferkörpers und/oder anderen Komponenten der Verdampferanordnung erfolgen, insbesondere z.B. mit einer Verdampferaufnahme oder einer Verdampferhalterung.

Gemäß einer Weiterbildung weist der Verdampferkörper zumindest einen zweiten Bereich aus einem Metallvlies, einem Metallgewebe, einem Metallgeflecht und/oder einem Metallgewirke auf. In diesem Fall können die Vor- und Nachteile der verschiedenen Materialien bzw. Strukturen gezielt zur Erzielung der gewünschten Verteilungs- und Verdampfungseigenschaften kombiniert werden.

Gemäß einer Weiterbildung ist der zweite Bereich durch Versintern, Verlöten oder Verschweißen mit dem ersten Bereich verbunden. In diesem Fall wird eine besonders hohe mechanische Stabilität des Verdampferkörpers erreicht und der Wärmeübergang zwischen den Bereichen wird verbessert.

Grundsätzlich können Drähte des Metalldraht-Gestricks eine runde oder abgeflachte Querschnittsform aufweisen. Gemäß der vorliegenden Erfindung kommen Flachdraht oder Metalldraht mit einer mehreckigen Querschnittsform zur Anwendung. Es ist z.B. auch möglich, einen Bereich des Verdampferkörpers aus einem Metalldraht-Gestrick mit runden Drähten und einen Bereich des Verdampferkörpers aus einem Metalldraht-Gestrick mit anders geformten Drähten auszubilden. Unabhängig von der Querschnittsform kann die Oberfläche der Drähte auch gezielt aufgeraut sein.

Gemäß einer Weiterbildung weist die Verdampferanordnung eine topfförmige Verdampferaufnahme auf, in der der Verdampferkörper aufgenommen ist und in die die Brennstoffzufuhrleitung mündet. In diesem Fall wird in konstruktiv besonders einfacher und kostengünstiger Weise eine zuverlässige Verdampfung des flüssigen Brennstoffs erzielt.

Gemäß einer anderen Weiterbildung weist die Verdampferanordnung eine stabförmige Verdampferhalterung auf, an deren Außenumfang der Verdampferkörper anliegt. In diesem Fall können eine besonders gute Aufbereitung eines Brennstoff-Luft-Gemischs nach der Verdampfung des flüssigen Brennstoffs in und an dem Verdampferkörper und eine gute Stabilisierung des Umsetzungsprozesses des Brennstoff-Luft-Gemisches erreicht werden. Die stabförmige Verdampferhalterung kann dabei z.B. als ein massiver Stab ausgebildet sein, dessen Außenumfang zumindest teilweise von dem Verdampferkörper bedeckt ist, oder kann z.B. auch eher rohrartig mit einem inneren Hohlraum versehen sein, z.B. um eine Rückführung von Verbrennungsgasen durch den Hohlraum zu ermöglichen.

Gemäß einer Weiterbildung ist eine Brennluftzuführung zum Zuführen von Brennluft zu einer von der Brennstoffzufuhrleitung abgewandten Seite des Verdampferkörpers vorgesehen. In diesem Fall kann der in und an dem Verdampferkörper verdampfte Brennstoff zuverlässig von dem Verdampferkörper abgeführt und mit der zugeführten Brennluft zu einem gewünschten Brennstoff-Luft-Gemisch aufbereitet werden. Da die Brennluft zu einer von der Brennstoffzufuhrleitung abgewandten Seite des Verdampferkörpers zugeführt wird, wird dabei der eigentliche Verdampfungsprozess bzw. Verdunstungsprozess des flüssigen Brennstoffs an und in dem Verdampferkörper nicht behindert.

Das Metalldraht-Gestrick kann z.B. auch mit einer katalytischen Beschichtung versehen sein, um eine Ablagerungsbildung zu reduzieren oder zu unterbinden.

Die Aufgabe wird auch durch ein mobiles Heizgerät mit einer solchen Verdampferanordnung gemäß Anspruch 11 gelöst.

Weitere Vorteile und Weiterbildungen ergeben sich aus der nachfolgenden Beschreibung von Ausführungsbeispielen unter Bezugnahme auf die beiliegenden Zeichnungen.
- Fig. 1: ist eine schematische Darstellung einer Verdampferanordnung zum Verdampfen von flüssigem Brennstoff in einem mobilen, brennstoffbetriebenen Heizgerät gemäß einer Ausführungsform;
- Fig. 2 a): ist eine schematische Darstellung einer Verdampferaufnahme mit einem Verdampferkörper gemäß einer ersten Abwandlung der Ausführungsform;

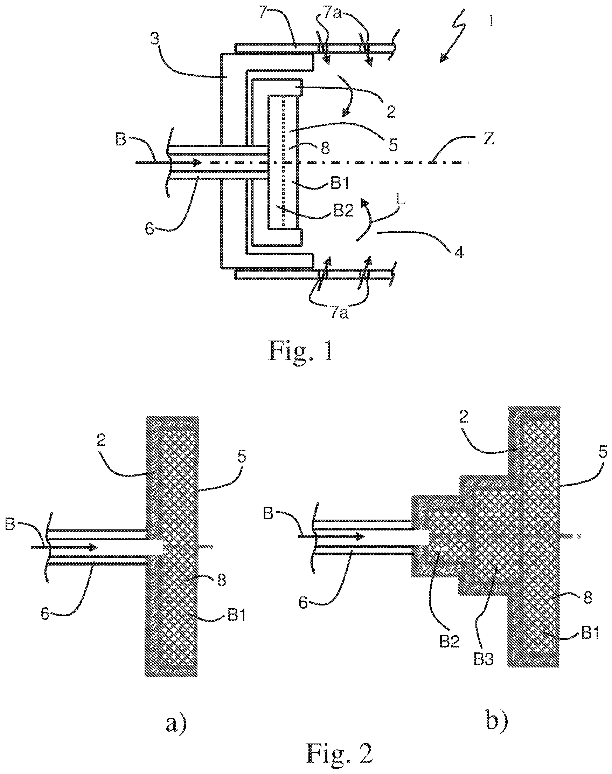

- Fig. 2 b): ist eine schematische Darstellung einer Verdampferaufnahme mit einem Verdampferkörper gemäß einer zweiten Abwandlung der Ausführungsform;

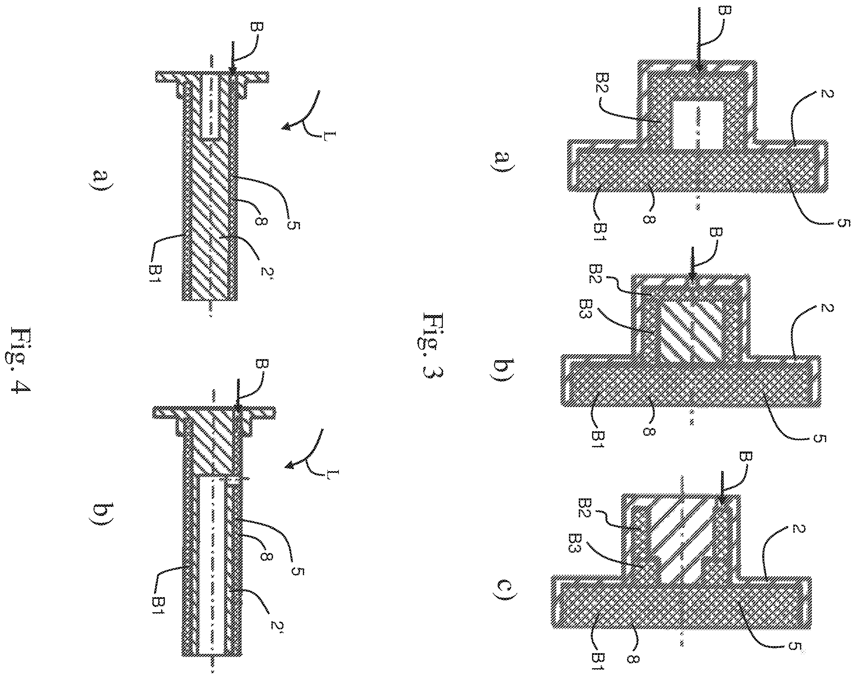

- Fig. 3 a): ist eine schematische Darstellung einer Verdampferaufnahme mit einem Verdampferkörper gemäß einer dritten Abwandlung der Ausführungsform;
- Fig. 3 b): ist eine schematische Darstellung einer Verdampferaufnahme mit einem Verdampferkörper gemäß einer vierten Abwandlung der Ausführungsform;
- Fig. 3 c): ist eine schematische Darstellung einer Verdampferaufnahme mit einem Verdampferkörper gemäß einer fünften Abwandlung der Ausführungsform;
- Fig. 4 a): ist eine schematische Darstellung einer Abwandlung der Ausführungsform, bei der der Verdampferkörper anstatt in einer Verdampferaufnahme an dem Außenumfang einer stabförmigen Verdampferhalterung angeordnet ist;
- Fig. 4 b): ist eine schematische Darstellung einer weiteren Ausgestaltung basierend auf der Abwandlung von Fig. 4 a);

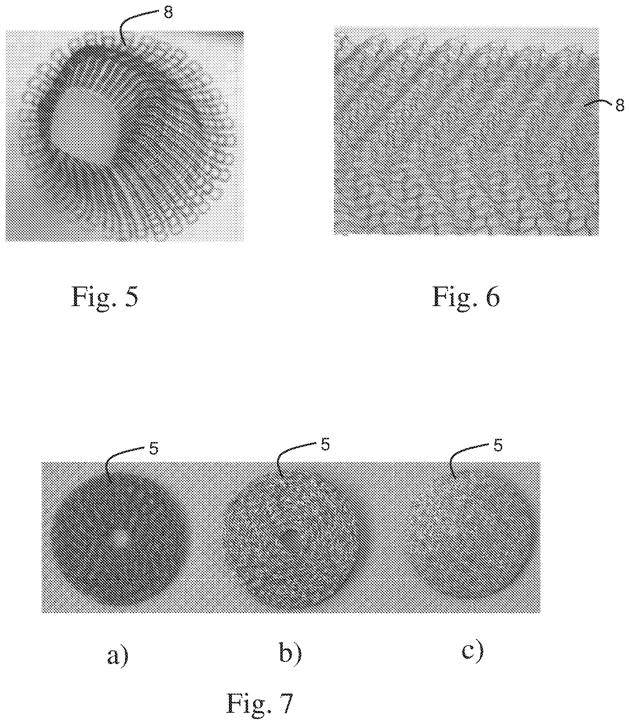

- Fig. 5: ist eine Darstellung eines Metalldraht-Gestricks in Form eines Rundgestrickes, wie es bei dem Verdampferkörper zur Anwendung kommen kann;
- Fig. 6: ist eine Darstellung eines Metalldraht-Gestricks in Form eines Flachgestrickes, wie es bei dem Verdampferkörper zur Anwendung kommen kann; und
- Fig. 7 a) bis c): sind Darstellungen verschiedener durch Umformen und Verdichten aus Metalldraht-Gestrick erzeugter Verdampferkörper.

### AUSFÜHRUNGSFORM

Eine erste Ausführungsform wird im Folgenden unter Bezugnahme auf Fig. 1 eingehender beschrieben.

In Fig. 1 ist schematisch ein Bereich einer Verdampferaufnahme 2 und eines Brennerdeckels 3 eines Verdampferbrenners für ein mobiles Heizgerät dargestellt. Fig. 1 ist eine schematische Darstellung in einer Ebene, die eine Hauptachse Z des Verdampferbrenners enthält. Der Verdampferbrenner kann z.B. im Wesentlichen eine Rotationssymmetrie bezüglich der Hauptachse Z aufweisen. Der Verdampferbrenner kann z.B. für ein Fahrzeugheizgerät, insbesondere eine Zusatzheizung oder eine Standheizung ausgebildet sein. Der Verdampferbrenner ist dabei insbesondere dazu ausgebildet, in einem Brennraum 4 eine Mischung von verdampftem Brennstoff und Brennluft, also ein Brennstoff-Luft-Gemisch, unter Freisetzung von Wärme umzusetzen. Die Umsetzung kann dabei insbesondere in einer flammenden Verbrennung erfolgen, eine teil- oder vollkatalytische Umsetzung ist aber auch möglich. Die freigesetzte Wärme wird in einem (nicht dargestellten) Wärmetauscher auf ein zu erwärmendes Medium, das z.B. durch Luft oder eine Kühlflüssigkeit gebildet sein kann, übertragen. In der schematischen Darstellung von Fig. 1 sind insbesondere der Wärmetauscher, die Ableitung für die heißen Verbrennungsabgase, die ebenfalls vorgesehene Brennluftfördervorrichtung (z.B. ein Gebläse), die Brennstofffördervorrichtung (z.B. eine Dosierpumpe), die Steuereinheit zur Ansteuerung des Verdampferbrenners etc. nicht dargestellt. Diese Komponenten sind wohlbekannt und im Stand der Technik ausführlich beschrieben.

Die Verdampferanordnung 1 weist eine Verdampferaufnahme 2 auf, in der ein saugfähiger Verdampferkörper 5 angeordnet ist. Die Verdampferaufnahme 2 weist bei dem Ausführungsbeispiel eine im Wesentlichen topfförmige Form auf. Der Verdampferkörper 5 ist in der topfartigen Vertiefung der Verdampferaufnahme 2 aufgenommen und kann insbesondere fest in dieser gehalten sein, z.B. durch Verschweißen, Verlöten, Verklemmen oder unter Zuhilfenahme eines geeigneten Sicherungselements. Die Gestaltung des Verdampferkörpers 5 wird im Folgenden noch eingehender beschrieben.

Es ist eine Brennstoffzufuhrleitung 6 zum Zuführen von flüssigem Brennstoff zu dem Verdampferkörper 5 vorgesehen. Die Brennstoffzufuhrleitung 6 mündet in die Verdampferaufnahme 2 und steht mit einer (nicht dargestellten) Brennstofffördervorrichtung in Verbindung, über die in einem vorgegebenen Maß flüssiger Brennstoff durch die Brennstoffzufuhrleitung 6 gefördert werden kann, wie schematisch durch einen Pfeil B dargestellt ist. Die Brennstoffzufuhrleitung 6 ist, z.B. durch Verschweißen oder Verlöten fest mit der Verdampferaufnahme 2 verbunden.

Der Brennraum 4 ist umfangsseitig durch eine Brennkammer 7 begrenzt, die z.B. durch ein im Wesentlichen zylindrisches Bauteil aus einem temperaturbeständigen Stahl gebildet sein kann. Die Brennkammer 7 ist mit einer Mehrzahl von Löchern 7a versehen, über die Brennluft in den Brennraum 4 zuführbar ist, wie in Fig. 1 schematisch durch Pfeile dargestellt ist. Die Löcher 7a sind dabei Teil einer Brennluftzuführung L, über die Brennluft zu einer von der Brennstoffzufuhrleitung 6 abgewandten Seite des Verdampferkörpers 5 zugeführt wird.

Die Verdampferanordnung 1 ist derart ausgebildet, dass im Betrieb flüssiger Brennstoff über die Brennstoffzufuhrleitung 6 zu dem Verdampferkörper 5 zuführbar ist. In und an dem Verdampferkörper 5 erfolgt einerseits durch eine Vielzahl von Hohlräumen eine Verteilung des Brennstoffs über die gesamte Breite des Verdampferkörpers 5 und andererseits auf der dem Brennraum 4 zugewandten Seite ein Verdampfen bzw. Verdunsten des Brennstoffs. Bei der dargestellten Ausführungsform weist der Verdampferkörper 5 eine im Wesentlichen kreisförmige Querschnittsform auf, in deren Zentrum die Hauptachse Z des Verdampferbrenners verläuft. Der Verdampferkörper 5 kann jedoch auch andere Querschnittsformen aufweisen.

Die Verdampferanordnung 1 ist so ausgebildet, dass in dem Verdampferkörper 5 ein Verdampfen bzw. Verdunsten des flüssigen Brennstoffs erfolgt und der verdampfte Brennstoff erst bei dem Austritt aus dem Verdampferkörper 5, d.h. brennraumseitig, mit der zugeführten Brennluft zu einem Brennstoff-Luft-Gemisch vermischt wird. Die Zuführung von flüssigem Brennstoff und Brennluft erfolgt somit auf verschiedenen Seiten des Verdampferkörpers 5. Die Umsetzung des Brennstoff-Luft-Gemisches in einer exothermen Reaktion findet dabei nicht in dem Verdampferkörper, sondern in dem diesem nachgeordneten Brennraum 4 statt. In dem Verdampferkörper 5 befinden sich somit im Betrieb flüssiger Brennstoff und Brennstoffdampf und aufgrund des Verdampfungs- bzw. Verdunstungsprozesses wird gegebenenfalls anfänglich vorhandene Luft aus dem Verdampferkörper 5 ausgetrieben.

Bei dem in Fig. 1 dargestellten Ausführungsbeispiel, weist der Verdampferkörper 5 einen Aufbau mit mehreren funktionalen Bereichen auf, der in dem konkret dargestellten Beispiel in einen ersten Bereich B1 und einen zweiten Bereich B2 mit einer von der Struktur im ersten Bereich B1 abweichenden Struktur untergliedert ist. Der zweite Bereich B2 ist bei dem Ausführungsbeispiel der Brennstoffzufuhrleitung 6 zugewandt angeordnet und der erste Bereich B1 ist dem Brennraum 4 zugewandt angeordnet.

Bei dem Ausführungsbeispiel ist zumindest der erste Bereich B1 des Verdampferkörpers 5 aus einem Metalldraht-Gestrick 8 gebildet. Das Metalldraht-Gestrick 8 ist dabei durch Umformen und Verdichten mit der gewünschten Form und Porosität versehen. Für den ersten Bereich B1 aus Metalldraht-Gestrick 8 kann dabei als Ausgangsmaterial insbesondere zum Beispiel ein in Fig. 5 dargestelltes Rundgestrick oder ein in Fig. 6 dargestelltes Flachgestrick zum Einsatz kommen. Gemäß einer bevorzugten Realisierung können die Drähte des Metalldraht-Gestrickes 8 miteinander verschweißt, verlötet oder versintert sein. Für die Drähte des Metalldraht-Gestrickes 8 sind insbesondere Flachdraht oder eine mehreckige Querschnittsform möglich.

Bei dem dargestellten Ausführungsbeispiel ist auch der zweite Bereich B2 des Verdampferkörpers 5 aus einem Metalldraht-Gestrick 8 gebildet, der Verdampferkörper 5 weist aber in dem zweiten Bereich B2 eine von dem ersten Bereich B1 verschiedene Porosität auf. Es kann sich dabei in dem zweiten Bereich B2 z.B. um dasselbe Metalldraht-Gestrick 8 handeln, das lediglich unterschiedlich stark verdichtet wurde, oder es kann aber z.B. auch ein anderes Metalldraht-Gestrick verwendet werden, das sich z.B. in der Drahtstärke, der Maschenweite, der Drahtform oder Ähnlichem von dem Metalldraht-Gestrick 8 des ersten Bereichs B1 unterscheidet. Aufgrund der unterschiedlichen Porosität kann der zweite Bereich B2 z.B. für eine Verteilung des flüssigen Brennstoffs optimiert sein und der erste Bereich B1 z.B. für eine möglichst gute Verdampfung des Brennstoffs.

In einer alternativen Ausbildung des Verdampferkörpers 5 ist nur der erste Bereich B1 aus Metalldraht-Gestrick 8 gebildet und der zweite Bereich B2 kann insbesondere ein Metallgewebe, ein Metallvlies, ein Metallgeflecht und/oder ein Metallgewirke aufweisen. In diesem Fall kann der zweite Bereich B2 z.B. auch durch Verlöten, Verschweißen oder Versintern mit dem ersten Bereich B1 verbunden sein.

Obwohl in Fig. 1 eine spezielle Ausgestaltung dargestellt ist, bei der der erste Bereich B1 aus Metalldraht-Gestrick 8 auf einer dem Brennraum 4 zugewandten Seite des Verdampferkörpers 5 angeordnet ist und der zweite Bereich B2 auf einer der Brennstoffzufuhrleitung 6 zugewandten Seite des Verdampferkörpers 5, sind auch andere Anordnungen möglich. Z.B. kann der erste Bereich B1 auch auf der der Brennstoffzufuhrleitung 6 zugewandten Seite angeordnet sein oder die verschiedenen Bereiche können auch seitlich nebeneinander angeordnet werden. Z.B. ist es auch möglich, einen äußeren Randbereich des Verdampferkörpers 5 mit einer von einem zentralen Bereich des Verdampferkörpers 5 verschiedenen Struktur oder Porosität zu versehen. Obwohl mit Bezug auf Fig. 1 lediglich zwei unterschiedliche Bereiche B1 und B2 beschrieben wurden, können auch mehr als zwei unterschiedliche Bereiche vorgesehen werden und nahezu beliebig zueinander angeordnet werden, um die gewünschten Eigenschaften des Verdampferkörpers 5 zu erzielen.

Obwohl mit Bezug auf die Ausführungsform ein Verdampferkörper 5 beschrieben wurde, der zumindest zwei verschiedene Bereiche B1 und B2 aufweist, ist es gemäß einer in Fig. 2a) dargestellten Abwandlung z.B. auch möglich, den Verdampferkörper 5 mit nur dem ersten Bereich B1 auszubilden, d.h. keine verschiedenen Bereiche vorzusehen.

Bei der in Fig. 2b) schematisch dargestellten Abwandlung weist der Verdampferkörper 5 eine abgestufte Gestaltung mit insgesamt drei Bereichen B1, B2, B3 auf und die Verdampferaufnahme 2 ist entsprechend ausgebildet. Auch in diesem Fall können z.B. die Bereiche B1, B2 und B3 des Verdampferkörpers 5 jeweils durch Metalldraht-Gestrick 8 gebildet sein, das gegebenenfalls in der verschiedenen Bereichen mit unterschiedlicher Porosität versehen sein kann, oder es können z.B. ein oder zwei Bereiche Metallvlies, Metallgewebe, Metallgeflecht und/oder Metallgewirke aufweisen.

Weitere mögliche Ausgestaltungen von Verdampferkörpern 5 mit mehreren Bereichen B1, B2, B3 sind schematisch in den Fig. 3a, 3b und 3c dargestellt. Obwohl in den Fig. 3a, 3b und 3c die Brennstoffleitung 6 und weitere Komponenten nicht erneut dargestellt sind, versteht es sich, dass diese weiteren Komponenten auch bei der Abwandlung vorhanden sind. Auch in diesen Fällen können die verschiedenen Bereiche insbesondere wieder durch Metalldraht-Gestrick 8 gebildet sein oder es kann auch ein Teil der Bereiche z.B. wieder Metallvlies, Metallgewebe, Metallgeflecht und/oder Metallgewirke aufweisen.

In den Fig. 7 a) bis c) sind verschiedene mögliche Realisierungen von Verdampferkörpern 5 aus umgeformtem und verdichtetem Metalldraht-Gestrick 8 dargestellt.

In den Fig. 4a) und Fig. 4b) sind zwei weitere Abwandlungen dargestellt, bei denen der Verdampferkörper 5 nicht wie bei der zuvor beschriebenen Ausführungsform und den zuvor beschriebenen Abwandlungen in einer topfförmigen Verdampferaufnahme 2 aufgenommen ist, sondern der Verdampferkörper 5 stattdessen an dem Außenumfang einer stabförmigen Verdampferhalterung 2' angeordnet ist. Bei der in Fig. 4a) schematisch dargestellten Abwandlung ist die Verdampferhalterung 2' dabei als ein massiver Stab ausgebildet, wohingegen die Verdampferhalterung 2' bei der in Fig. 4b) dargestellten Abwandlung mit einem inneren Hohlraum ausgebildet ist, der z.B. einer Rückführung von Verbrennungsgasen durch die Verdampferhalterung 2' dienen kann. Auch in den Fig. 4a) und Fig. 4b) sind die Brennstoffzufuhrleitung 6 und die weiteren Komponenten zur Vereinfachung nicht erneut dargestellt. Die Position der Brennstoffleitung 6 ist aber z.B. anhand der durch den Pfeil B gekennzeichneten Stelle der Brennstoffzufuhr zu erkennen. Es ist ersichtlich, dass auch bei den in den Fig. 4a) und Fig. 4b) schematisch dargestellten Abwandlungen die Brennluftzuführung L auf einer von der Brennstoffleitung 6 abgewandten Seite des Verdampferkörpers 5 vorgesehen ist.

Obwohl in den Fig. 4a) und Fig. 4b) jeweils ein Verdampferkörper 5 dargestellt ist, der nur einen Bereich B1 aus Metalldraht-Gestrick 8 aufweist, ist es auch bei diesen Abwandlungen möglich, dass der Verdampferkörper 5 zwei oder mehr verschiedene Bereiche aufweist. Die verschiedenen Bereiche können dabei insbesondere wiederum z.B. eine unterschiedliche Porosität aufweisen. Die verschiedenen Bereiche können z.B. auch alle aus Metalldraht-Gestrick 8 gebildet sein oder aber es können zusätzlich auch ein oder mehr Bereiche vorgesehen sein, die Metallvlies, Metallgewebe, Metallgeflecht oder Metallgewirke aufweisen.

Bei sämtlichen beschriebenen Möglichkeiten der Ausgestaltung ist es insbesondere möglich, die verschiedenen Bereiche B1, B2, B3 untereinander durch z.B. Verschweißen, Verlöten oder Versintern miteinander zu verbinden oder aber auch den Verdampferkörper 5 mit der Verdampferaufnahme 2 oder der Verdampferhalterung 2' durch z.B. Verschweißen, Verlöten oder Versintern zu verbinden.

Bei der Verarbeitung des Metalldraht-Gestrickes 8 für den Verdampferkörper 5 können z.B. Regionen mit geringerer Dichte (z.B. weniger dicht gelegtem oder verpresstem Metalldraht-Gestrick) gezielt zum Toleranzausgleich genutzt werden, indem sie eine höhere Verformbarkeit als andere Bereiche aufweisen. Ferner können in ähnlicher Weise auch gezielt Auswölbungen des Metalldraht-Gestrickes 8 ausgebildet werden, um einen Toleranzausgleich in diesen Bereichen zu ermöglichen.

Ferner können in dem Metalldraht-Gestrick 8 des Verdampferkörpers 5 z.B. auch gezielt bereichsweise lokale Verdichtungen eingebracht werden, um die gewünschten Eigenschaften zu erzielen. Solche lokalen Verdichtungen können beispielsweise durch nachträgliches Rollieren eingebracht werden.

Um die gewünschten Eigenschaften des Verdampferkörpers einzustellen, kann z.B. auch die Drahtoberfläche des Metalldrahtes des Metalldraht-Gestrickes gezielt aufgeraut werden. Dies kann z.B. durch Rändeln des für das Metalldraht-Gestrick 8 verwendeten Drahtes erfolgen.

Ferner ist es möglich, durch die Art der Verdichtung des Metalldraht-Gestrickes gezielt eine Anisotropie der Wärmeleitung einzustellen, z.B. um eine verbesserte Wärmeleitung in einer bestimmten Richtung zu erzielen.

## Patentansprüche

1. Verdampferanordnung (1) zum Verdampfen von flüssigem Brennstoff für ein mobiles, brennstoffbetriebenes Heizgerät, mit:
einem Verdampferkörper (5) zum Verteilen und Verdampfen flüssigen Brennstoffs und zumindest einer Brennstoffzufuhrleitung (6) zum Zuführen flüssigen Brennstoffs zu dem Verdampferkörper (5),
wobei der Verdampferkörper (5) zumindest einen ersten Bereich (B1) aus einem Metalldraht-Gestrick (8) aufweist,
**dadurch gekennzeichnet, dass** der erste Bereich (B1) aus Metalldraht-Gestrick (8) umgeformtes und verdichtetes Metalldraht-Gestrick, das Flachdraht oder Metalldraht mit einer mehreckigen Querschnittsform aufweist, aufweist.

2. Verdampferanordnung nach Anspruch 1, wobei der Verdampferkörper zumindest einen weiteren Bereich (B2; B3) aus Metalldraht-Gestrick (8) mit einer von dem ersten Bereich (B1) verschiedenen Porosität aufweist.

3. Verdampferanordnung nach Anspruch 2, wobei das Metalldraht-Gestrick (8) in dem zumindest einen weiteren Bereich (B2; B3) einen von dem Metalldraht-Gestrick (8) in dem ersten Bereich (B1) verschiedenen Verdichtungsgrad und/oder eine verschiedene Drahtstärke aufweist.

4. Verdampferanordnung nach einem der vorangehenden Ansprüche, wobei das Metalldraht-Gestrick (8) aus einem Flachgestrick und/oder einem Rundgestrick gebildet ist.

5. Verdampferanordnung nach einem der vorangehenden Ansprüche, wobei die Drähte des Metalldraht-Gestricks (8) zumindest teilweise miteinander verschweißt, verlötet oder versintert sind.

6. Verdampferanordnung nach einem der vorangehenden Ansprüche, wobei der Verdampferkörper (8) zumindest einen zweiten Bereich (B2) aus einem Metallvlies, einem Metallgewebe, einem Metallgeflecht und/oder einem Metallgewirke aufweist.

7. Verdampferanordnung nach Anspruch 6, wobei der zweite Bereich (B2) durch Versintern, Verlöten oder Verschweißen mit dem ersten Bereich (B1) verbunden ist.

8. Verdampferanordnung nach einem der vorangehenden Ansprüche, wobei die Verdampferanordnung eine topfförmige Verdampferaufnahme (2) aufweist, in der der Verdampferkörper (5) aufgenommen ist und in die die Brennstoffzufuhrleitung (6) mündet.

9. Verdampferanordnung nach einem der Ansprüche 1 bis 7, wobei die Verdampferanordnung eine stabförmige Verdampferhalterung (2') aufweist, an deren Außenumfang der Verdampferkörper (5) anliegt.

10. Verdampferanordnung nach einem der vorangegangenen Ansprüche, wobei eine Brennluftzuführung (L) zum Zuführen von Brennluft zu einer von der Brennstoffzufuhrleitung (6) abgewandten Seite des Verdampferkörpers (5) vorgesehen ist.

11. Mobiles Heizgerät mit einer Verdampferanordnung (1) nach einem der vorangehenden Ansprüche.

## Claims

1. An evaporator arrangement (1) for evaporating liquid fuel for a mobile, fuel-operated heating device, comprising:
an evaporator body (5) for distributing and evaporating liquid fuel and at least one fuel supply line (6) for supplying liquid fuel to the evaporator body (5),
wherein the evaporator body (5) comprises at least a first region (B1) from a knitted metal wire fabric (8),
**characterized in that** the first region (B1) from knitted metal wire fabric (8) comprises plastically deformed and compressed knitted metal wire fabric comprising flat wire or metal wire with a polygonal cross-sectional shape.

2. The evaporator arrangement as claimed in claim 1, wherein the evaporator body comprises at least one additional region (B2; B3) from knitted metal wire fabric (8) having a porosity which is different from the first region (B1).

3. The evaporator arrangement as claimed in claim 2, wherein the knitted metal wire fabric (8) has in the at least one additional region (B2; B3) a degree of compression which is different from the knitted metal wire fabric (8) in the first region (B1) and/or a different wire thickness.

4. The evaporator arrangement as claimed in one of the preceding claims, wherein the knitted metal wire fabric (8) is formed from a flat knitted fabric and/or a round knitted fabric.

5. The evaporator arrangement as claimed in one of the preceding claims, wherein the wires of the knitted metal wire fabric (8) are at least partially welded, soldered or sintered to each other.

6. The evaporator arrangement as claimed in one of the preceding claims, wherein the evaporator body (8) comprises at least a second region (B2) from a nonwoven metal fabric, a woven metal fabric, a metal braiding and/or a meshed metal fabric.

7. The evaporator arrangement as claimed in claim 6, wherein the second region (B2) is connected to the first region (B1) by means of sintering, soldering or welding.

8. The evaporator arrangement as claimed in one of the preceding claims, wherein the evaporator arrangement comprises a cup-shaped evaporator accommodation (2) in which the evaporator body (5) is received and in which the fuel supply line (6) opens.

9. The evaporator arrangement as claimed in one of claims 1 to 7, wherein the evaporator arrangement comprises a rod-like evaporator holder (2') against the outer periphery of which the evaporator body (5) rests.

10. The evaporator arrangement as claimed in one of the preceding claims, wherein a combustion air supply (L) is provided for supplying combustion air to a side of the evaporator body (5) facing away from the fuel supply line (6).

11. Mobile heating device having an evaporator arrangement (1) as claimed in one of the preceding claims.

## Revendications

1. Agencement d'évaporateur (1) destiné à l'évaporation de combustible liquide pour un appareil de chauffage mobile alimenté par du combustible, comprenant :
un corps d'évaporateur (5) destiné à répartir et à évaporer du combustible liquide et au moins une conduite d'introduction de combustible (6) destinée à introduire du combustible liquide dans le corps d'évaporateur (5),
le corps d'évaporateur (5) comprenant au moins une première zone (B1) constituée d'un tricot de fil métallique (8),
**caractérisé en ce que** la première zone (B1) constituée d'un tricot de fil métallique (8) comprend un tricot de fil métallique déformé et compacté, qui comprend un fil plat ou un fil métallique ayant une forme de section transversale polygonale.

2. Agencement d'évaporateur selon la revendication 1, dans lequel le corps d'évaporateur comprend au moins une zone supplémentaire (B2 ; B3) constituée de tricot de fil métallique (8) ayant une porosité différente de la première zone (B1).

3. Agencement d'évaporateur selon la revendication 2, dans lequel le tricot de fil métallique (8) dans ladite au moins une zone supplémentaire (B2 ; B3) présente un degré de compactage différent et/ou une épaisseur de fil différente du tricot de fil métallique (8) dans la première zone (B1).

4. Agencement d'évaporateur selon l'une quelconque des revendications précédentes, dans lequel le tricot de fil métallique (8) est formé par un tricot plat et/ou un tricot rond.

5. Agencement d'évaporateur selon l'une quelconque des revendications précédentes, dans lequel les fils du tricot de fil métallique (8) sont au moins partiellement soudés, brasés ou frittés les uns avec les autres.

6. Agencement d'évaporateur selon l'une quelconque des revendications précédentes, dans lequel le corps d'évaporateur (8) comprend au moins une deuxième zone (B2) constituée d'un non-tissé métallique, d'un tissu métallique, d'un treillis métallique et/ou d'un tissu à mailles métallique.

7. Agencement d'évaporateur selon la revendication 6, dans lequel la deuxième zone (B2) est reliée avec la première zone (B1) par frittage, brasage ou soudage.

8. Agencement d'évaporateur selon l'une quelconque des revendications précédentes, dans lequel l'agencement d'évaporateur comprend un logement d'évaporateur en forme de pot (2), dans lequel le corps d'évaporateur (5) est logé et dans lequel la conduite d'introduction de combustible (6) débouche.

9. Agencement d'évaporateur selon l'une quelconque des revendications 1 à 7, dans lequel l'agencement d'évaporateur comprend un support d'évaporateur en forme de barreau (2'), sur la périphérie extérieure duquel le corps d'évaporateur (5) repose.

10. Agencement d'évaporateur selon l'une quelconque des revendications précédentes, dans lequel une introduction d'air de combustion (L) destinée à introduire de l'air de combustion dans un côté, opposé à la conduite d'introduction de combustible (6), du corps d'évaporateur (5) est prévue.

11. Appareil de chauffage mobile comprenant un agencement d'évaporateur (1) selon l'une quelconque des revendications précédentes.
